(19) Europäisches Patentamt
European Patent Office
Office européen des brevets

(11) Publication number: 0 415 593 B1

# EUROPEAN PATENT SPECIFICATION

(45) Date of publication of patent specification: 01.02.95

(51) Int. Cl.6: C09D 5/44

(21) Application number: 90308866.4

(22) Date of filing: 13.08.90

(54) Electrodeposition paint composition.

(30) Priority: 14.08.89 JP 207825/89

(43) Date of publication of application:
06.03.91 Bulletin 91/10

(45) Publication of the grant of the patent:
01.02.95 Bulletin 95/05

(84) Designated Contracting States:
DE GB

(56) References cited:
EP-A- 0 052 831
EP-A- 0 200 399
EP-A- 0 259 181
EP-A- 0 261 385

(73) Proprietor: NISSAN MOTOR CO., LTD.
No.2, Takara-cho, Kanagawa-ku
Yokohama City (JP)

Proprietor: NIPPON PAINT COMPANY LIMITED
No. 2-1-2, Oyodokita,
Kita-ku
Osaka City,
Osaka (JP)

(72) Inventor: Hattori, Tsutomu
Nissansagamiryo,
No. 3-4688-1
Sobudai,
Zama City (JP)
Inventor: Masui, Hirofumi
Panshion-aiko-ishida 1-101, no. 9-3
Higashinaruse, Isehara City (JP)
Inventor: Iizuka, Katsui
Nissan-sagamiryo A-113, No. 3-4688-1
Sobudai,
Zama City (JP)
Inventor: Nishigaki, Satoshi
Nissansagamiryo,
No. 3-4688-1
Sobudai,
Zama City (JP)
Inventor: Habara, Sencho, c/o Nippon Paint
Co., Ltd.
No. 4-1-15, Minamishinagawa
Shinagawa-ku,
Tokyo (JP)
Inventor: Funakoshi, Fumio, c/o Nippon Paint
Co., Ltd.
No. 4-1-15, Minamishinagawa
Shinagawa-ku,
Tokyo (JP)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

EP 0 415 593 B1

(74) Representative: **Lamb, John Baxter et al**
**MARKS & CLERK,**
**57-60 Lincoln's Inn Fields**
**London WC2A 3LS (GB)**

## Description

This invention relates to improvements in a cationic electrodeposition paint composition, and more particularly to a cationic electrodeposition paint composition which is high in an ability for covering an edge portion of a metal plate and high in weatherability.

Hitherto a cationic electrodeposition paint has been prepared by neutralizing a variety of basic resins such as basic epoxy resin, acrylic resin and polyurethane resin with organic acids and thereafter by diluting it with water. In order to accomplish an electrodeposition painting, a metal object to be coated with a paint is dipped in the cationic electrodeposition paint and serves as a cathode. Upon passing direct current through the metal object, a paint film is deposited on the surface of the metal object and thereafter baked to be hardened.

The cationic electrodeposition paint usually includes epoxy resin as a main component. Such a cationic electrodeposition paint including epoxy resin is excellent in corrosion resistance to the metal object (plate) to be coated with the paint but inferior in weatherability. In contrast, another cationic electrodeposition paint including acrylic resin as a main component is excellent in weatherability but inferior in the corrosion resistance of a metal object (plate) to be coated with the paint. Such a fact is well known in the art.

Additionally, in recent years, an improved cationic electrodeposition paint including epoxy resin as a main component has been proposed to raise an ability of covering an edge portion of a metal plate. Such an electrodeposition paints are disclosed for example in Japanese Patent Publication No. 62-43470; Japanese Patent Provisional Publication Nos. 61-91201, 61-281169, 63-68677, 62-222688, 62-236873 and 63-89579; and EP-A-0261385 and EP-A-0259181.

## SUMMARY OF THE INVENTION

It is an object of the present invention to provide an improved cationic electrodeposition paint composition which is higher in an ability of covering the edge portion of a metal object to be coated with the paint and high in weatherability.

Another object of the present invention is to provide an improved cationic electrodeposition paint composition which is securely covering the edge portion produced upon machining a metal object to be coated with the paint while being prevented from chalking even upon a long time exposure to an outdoor condition.

A cationic electrodeposition paint composition according to the present invention comprises an amine-modified epoxy resin; a fully blocked isocyanate; a cationic emulsified and dispersed acrylic resin, a weight ratio in solid content between total of the epoxy resin and the isocyanate and said acrylic resin being 50:50 to 30:70; a cationic gelled particulate in an amount ranging from 10 to 20% by weight of the paint composition; and a pigment in an amount that a weight ratio in solid content between said pigment and a total resin content in the paint composition being 1:4 to 1:7.

Accordingly, the cationic electrodeposition paint composition of the present invention can provide a paint film coated on the surface of a steel plate, which is high in the edge portion covering ability to improve a corrosion resistance to the steel plate while being highly improved in weatherability and smoothness of the paint film. The paint composition of the present invention is particularly advantageous for use in a road wheel of an automotive vehicle which is brought into a severe condition.

## BRIEF DESCRIPTION OF THE DRAWING

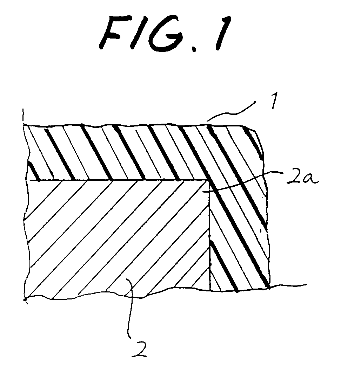

The single figure, Fig. 1 is a fragmentary sectional view of an automotive vehicle wheel coated with a cationic electrodeposition paint composition in accordance with the present invention.

## DETAILED DESCRIPTION OF THE INVENTION

According to the present invention, there is provided a cationic electrodeposition paint composition which comprises an amine-modified epoxy resin; a fully blocked isocyanate; a cationic emulsified and dispersed type acrylic resin, the weight ratio in solid content between total of the epoxy resin and isocyanate and the acrylic resin being 50:50 to 30:70; an acrylic cationic gelled particulate in an amount ranging from 10 to 20% by weight in solid content relative to the total solid content of the paint composition; and a pigment in such an amount that a weight ratio in solid content between said pigment and a total resin content in the paint composition being 1:4 to 1:7.

3

In the present invention, by virture of the weight ratio (50:50 to 30:70) in solid content between [the total of the epoxy resin and the isocyanate] and the acrylic resin, the paint composition is greatly improved in weatherability of a coated paint film of the paint composition over a conventional cationic electrodeposition paint composition which includes an amine-modified epoxy resin and a blocked isocyanate without including a cationic emulsified and dispersed type acrylic resin. The conventional paint composition is good in corrosion resistance to the generally flat surface of a metal object (steel plate) to be coated but inferior in weatherability of a coated paint film of the paint composition. Additionally, by virtue of using the fully blocked isocyanate preferably of the type of being high in vapor pressure at high temperatures, the weatherability of the coated paint film of the paint composition of the present invention is further improved. If the weight ratio between the epoxy resin (containing the isocyanate) and the acrylic resin is 70:30, the weatherability of coated paint film isinsufficient and at about the same level as that of the conventional paint composition. Thus, it is necessary to increase the rate of the acrylic resin over the ratio (50:50) between the epoxy resin (containing the isocyanate) and the acrylic resin. If the ratio between the epoxy resin (containing the isocyanate) and the acrylic resin is 20:80, corrosion resistance of the coated paint film to a metal object (steel plate) to be coated is inferior. In this connection, in case of using an epoxy resin system cationic electrodepositon paint and an acrylic resin system cationic electrodeposition paint as raw materials, the former and the latter may be used in a weight ratio from 50:50 to 30:70.

An ability of covering an edge portion is improved by increasing the content or blended amount of the pigment, particularly of scale-shaped pigment. This improves the corrosion resistance of the metal object (steel plate) on which the paint film is coated. In order to further improve the edge portion covering ability, it is preferable to increase the weight rate of a total resin content in the paint compositon over a weight ratio (1:2.6) between the pigment and a total resin content. In this connection, it is more preferable that the weight ratio between the pigment and the total resin content is from 1:4 to 1:7. Within this weight ratio, the content of the epoxy resin, the acrylic resin and the gelled particulate may be controlled for the purpose of improving the weatherability and the corrosion resistance (including the edge portion covering ability) of the coated paint film to the metal object.

If the content or blended amount of the pigment is increased to improve the edge portion covering ability, the coated paint film is increased in its specific gravity and degraded in its gloss, while deteriorating the weatherability of the coated paint film. Additionally, such an increase in the content of the pigment causes sedimentation of a large amount of the pigment at a location in an electrodeposition bath where stirring is weak or a location where no stirring is made, thereby rendering the maintenance of the electrodeposition paint path troublesome.

In connection with the above, according to the present invention, the cationic gelled particulate (referred to as "Micro-gel") is blended in the paint composition so that its amount is 10 to 20% by weight in solid content relative to the total solid content of the paint composition, thereby suppressing a thermal flowability of the coated paint film. This largely improves the edge portion covering ability. If the amount is 5% by weight in solid content relative to the total solid content of the paint composition, the coated paint film is degraded in corrosion resistance to the edge portion of the metal object to be coated. If the amount is 25% by weight in solid content, a surface condition of the coated paint film is extremely deteriorated. As a result, a suitable range of the blended amount of the cationic gelled particulate has been determined to be from 10 to 20% by weight relative to the total solid content of the paint composition.

Furthermore, employment of the cationic gelled particulate contributes to decreasing the content of the scale-shaped pigment and the total blended amount of the pigment, thereby improving the gloss of the coated paint film. It is preferable that an acrylic cationic gelled particulate is used as the cationic gelled particulate of the present invention, thereby further improving the weatherability of the coated paint composition.

The cationic electrodeposition paint composition of the present invention comprises, as a basic component, an emulsified and despersed type cationic electrodeposition paint component including the amine-modified epoxy resin is usually produced by adding secondary amine to a variety of known epoxy resins such as glycidyl ethertype epoxy resin, glycidyl estertype epoxy resin, linear aliphatic epoxy resin and alicyclic epoxy resin as disclosed for example in a text book "Epoxy Resin" compiled by Kensaku Saeki and published in 1973 by Kobunshi-kankokai (in Japan). The known epoxy resins include epoxy resin which is produced by extending the main chain of the above-mentioned epoxy resins with polyether glycol, polyester glycol, long-chain dibasic acid and the like and which has at least one epoxy group.

Examples of the secondary amine are diethyl amine, dibutyl amine, diethanol amine, N-methylethanol amine, and ketimine-blocked secondary amine. The epoxy resin is modified with tertiary amine or phosphine in the presence of acid thereby to form a quaternary onium salt as a basic resin. Otherwise, the basic resin is formed by using a Mannich base. Thus, the basic group added to the epoxy resin is not limited to the amine.

The fully blocked isocyanate is produced, for example, by reacting polyisocyanate compound with a compound having active hydrogen. The polyisocyanate compound is made from an isocyanate compound such as tolylene diisocyanate, xylylene diisocyanate, isophorone diisocyanate, hexamethylene diisocyanate and the like. Examples of the compound having active hydrogen are alcohol, phenol and oxyme.

The cationic emulsified and dispersed type acrylic resin is usually produced by copolymerizing an unsaturated monomer having basic group with another unsaturated monomer, or by providing basic group to copolymer of unsaturated monomers having glycidyl group. Examples of the unsaturated monomer having basic group are N,N-dimethylaminoethyl (meth)acrylate, N-t-butylaminoethyl (meth)acrylate, N,N-dimethylaminopropyl (meth)acrylamide, and N-vinyl imidazole. Examples of the above-mentioned another unsaturated monomer copolymerizable with the above unsaturated monomer are (meth)acrylate esters such as methyl (meth)acrylate, ethyl (meth)acrylate, n-butyl (meth)acrylate, 2-ethylhexyl (meth)acrylate; hydroxyalkyl (meth)acrylates such as hydroxyethyl (meth)acrylate, hydroxypropyl (meth)acrylate, hydroxyhexyl (meth)acrylate; styrene system monomers such as styrene, vinyl toluene, 2-methyl methylene, chlorostyrene; N-substituted (meth)acrylate system monomers such as N-methylol (meth)acrylamide, N-butoxymethyl (meth)acrylamide; epoxy-containing monomers such as glycidyl (meth)acrylate; acrolyonitrile; and vinyl acetate.

An example of a method for providing basic group to copolymer of unsaturated monomers having glycidyl group is adding diethyl amine, dibutyl amine, dipropyl amine, diethanol amine, dipropanol amine, N-methylethanol amine and/or the like to the glycidyl group. A copolymer is usually obtained by copolymerization at a temperature of 80 to 150°C under the effect of a radical polymerization initiator. Examples of the radical polymerization initiator are azo system compounds such as azobisiso butylnitrile and azobisiso valeronitrile; peroxides such as benzoyl peroxide, di-t-butyl peroxide and cumene hydroperoxide; and redox system compounds such as benzoil peroxide and N,N-dimethyl aniline. Additionally, a chain transfer agent may be used for the copolymerization to control a molecular weight of copolymer if necessary. Examples of the chain transfer agent are n-lauryl mercaptan, n-dodecyl mercaptan, t-dodecyl mercaptan and 2-mercaptoethanol.

Cationic resinous particulate as a raw material of the cationic gelled particulate is produced by some of conventional methods which have been hitherto proposed. One of them is carrying out a suspension polymerization or an emulsion polymerization of ehtylenic unsaturated monomer and/or copolymerizable monomers which is cross-linkable, in an aqueous solvent or medium thereby to obtain a resinous particulate-dispersed liquid. Another is carrying out a polymerization of ethylenic unsaturated monomer and/or copolymerizable monomers which is cross-linkable, in a non-aqueous organic solvent which dissolves monomer but does not dissolve polymer thereby obtaining particulate copolymer which is dispersed in the solvent. This is called a NAD (Non-queous Dispersion) method or a precipitation separation process. Such a non-aqueous organic solvent is a low compatibility organic solvent of aliphatic hydrocarbon system or a high compatibility organic solvent selected from ester, ketone, alcohol and the like.

The acrylic cationic resinous particulate may be produced from an appropriate unsaturated monomer having basic group and another appropriate unsaturated monomer which is copolymerizable with the former unsaturated monomer. Examples of such unsaturated monomers are the same as those used for production of the cationic emulsified and dispersed type acrylic resin.

The above-mentioned cross-linkable and copolymeriable monomer includes a monomer having at least two radical-copolymerizable ethylenic unsaturated bonds in a molecule and/or a monomer having two kinds of ethylenic unsaturated groups which respectively carry mutually reactable groups.

The monomer having at least two radical-copolymerizable ethylenic unsaturated bonds include polymerizable unsaturated monocarboxylic ester of a polyhydric alcohol, a mixable unsaturated alcohol ester of a polybasic acid and an aromatic compound whose parts have been substituted with at least two vinyl groups.

Examples of such a monomer are ethyleneglycol diacrylate, ethyleneglycol dimethacrylate, triethylene glycol dimethacrylate, tetraethyleneglycol dimethacrylate, 1,3-butyleneglycol dimethacrylate, trimethylpropane triacrylate, trimethylpropane trimethacrylate, 1,4-butanediol diacrylate, neopentylglycol diacrylate, 1,6-hexanediol diacrylate, pentaerythritol diacrylate, pentaerythritol triacrylate, pentaerythritol tetraacrylate, pentaerythritol dimethacrylate, pentaerythritol trimthacrylate, pentaerythritol tetramethacrylate, glycerol dimethacrylate, glycerol diacrylate, glycerolaryloxy dimethacrylate, 1,1,1-trishydroxy methylethane diacrylate, 1,1,1-trishydroxy methylethane triacrylate, 1,1,1-trishydroxy methylethane dimethacrylate, 1,1,1-trishydroxy methylethane trimethacrylate, 1,1,1-trihydroxy methylpropane diacrylate, 1,1,1-trishydroxy methyl propane triacrylate, 1,1,1-trishydroxy methylpropane dimethacrylate, 1,1,1-trishydroxy methylpropane trimethacrylate, triaryl cyanurate, triaryl isocyanurate, triaryl trimellitate, diaryl terephthalate, diaryl

5

phtahalate and divinyl benzene.

Typical examples of the monomer having two kinds of ethylenic unsaturated groups which respectively carry matually reactable groups are epoxy group-containing ethylenic unsaturated monomers such as glycidyl acrylate, diglycidyl metacrylate; and carboxyl group-containing ethylenic unsaturated monomers such as acrylic acid, methacrylic acid and crotonic acid. However, the mutually reactable groups are not limited to those of the above-listed monomers and therefore may include, for example, those of a group of amine and carbonyl compound, a group of epoxide and carboxylic acid anhydride, a group of amine and chloride of carboxylic acid, a group of alkylene imine and carbonyl compound, a group of organoalkoxy silane and carboxyl compound, and a group of hydroxyl compound and isocyanate.

The resinous particulate produced in the aqueous solvent and the non-aqueous organic solvent are separated under filtering, spray-drying, freeze-drying and/or the like. The separated resinous particulate are used as it is or further pulverized to obtain predetermined particle sizes by using a mill. As the cationic gelled particulate of the present invention, a liquid (the solvent) containing the synthesized resinous particulates may be used as it is. Otherwise, the liquid is used as the cationic gelled particulate upon substituting the solvent with another solvent by a so-called solvent substitution.

In general, it is preferable to control the particle sizes of the resinous particulate by polymerization methods. The emulsion polymerization and the NAD method are suitable for obtaining a particle size ranging from 0.2 to 0.6 $\mu$. The precipitation polymerization is suitable for obtaining a particle size ranging from 0.2 to 20 $\mu$.

A softening point of the resinous particulate can be controlled according to the composition of mixture of monomers particularly the rate of cross-linkable monomer, and to the molecular weight of polymer. In general, the softening point of the obtained resinous particulate rises as the rate of the cross-linkable monomer increases or as the molecular weight of the produced polymer increases.

It is preferable that the resinous particulate has an ionized group having the same polarity as the aqueous resin serving as a basic resin in order to maintain a stable dispersion state in the electrodeposition paint and in an electrodeposition bath. In other words, the resinous particulate preferably carries anionic groups such as carboxyl group and sulfonic acid group in case of an anionic electrodeposition painting while cationic groups such as amino group and quaternary ammonium group in case of a cationic electrodeposition painting. This is realized by the following processes: (1) A monomer having ethylenic unsaturated bond and carboxyl group and a monomer having ethylenic unsaturated bond and basic group are added to a mixture of monomers in synthesis of the resinous particulate. The former monomer includes acrylic acid and/or methacrylic acid. The latter monomer includes dimethylaminoethyl (meth)acrylate and/or vinyl pyridines. (2) The mixture of monomers are mixed by using an initiator which provides cationic end groups to polymers in synthesis of the resinous particulate.

In case that the polymers constituting the resinous particulate are non-polar, the resinous particulate may be stably dispersed by using an Oligo-soap, a Poly-soap and/or a reactive emulsifier having dipolar ion group. Such an emulsifier having the dipolar ion group is disclosed for example in Japanese Patent Provisional Publication No. 56-24461, 57-21927 and 57-40522.

The resinous particulate may be produced in the following method: Polymer is obtained by polymerizing the above-mentioned single-functional ethylenic unsaturated monomer and/or the above-mentioned cross-linkable monomer under a solution polymerization, a bulk polymerization or the like. The thus obtained polymer is pulverized and classified in particle size to obtain the resinous particulate having predetermined particle sizes.

In case of the resinous particulate made of epoxy resin, melamine resin, alkyd resin or the like, the resinous particulate may be produced in the following method: Resinous solution of the above resin is dispersed to be emulsified in water. The thus formed emulsified and dispersed liquid is dried under being sprayed thereby obtaining the resinous particulate having predetermined particle sizes. In case that the resin is solid, the solid resin is pulverized and classified in particle size thereby to obtain the resinous particulate having predetermined particle sizes.

It has been recognized that the weatherabily of the coated paint film of the cationic electrodeposition paint composition is higher in case of using acrylic resin as a main component than that in case of using polybutadienic resin as a main component.

The cationic electrodeposition paint composition of the present invention may include an organic solvent in order to promote formation of water-solution and water-dispersion of the resins and to obtain a smooth coated paint film. The organic solvent is not necessarily required to be hydrophilic. Examples of the organic solvent are alcohols such as methyl alcohol, ethyl alcohol, isopropyl alcohol, butyl alcohol and hexyl alcohol; ethyleneglycol monoethers such as ethyleneglycol monomethyl ether, ethyleneglycol monoethyl ether, ethyleneglycol monobutyl ether and ethyleneglycol monoisopropyl ether; hydrocarbons such as xylene and toluene; and ketones such as methylethyl ketone, methylisobutyl ketone and isophorone. The blended amount or content of such an organic solvent is not particularly limited but usually 10 to 40% by weight relative to the total solid content of the paint composition.

The cationic electrodeposition paint composition of the present invention may include conventional additives such as a pigment, a surface active agent, a hardening accelerator, an antifoaming agent, a ultraviolet ray absorber, an antixodiant and/or the like, if necessary.

Examples of the pigment are colouring pigments such as carbon black, titanium oxide, iron oxide, cyanine blue and lancashire red (a known red pigment); extender pigments such as calcium carbonate, aluminium silicate and barium sulfate; and corrosion-resistant pigment such as strontium chromate and basic lead silicate.

In order to conduct an electrodeposition painting by using the cationic electrodeposition paint composition of the present invention, an electrodeposition voltage of 50 to 400 V is impressed for 1 to 5 minutes between the metal object (serving as a cathode) to be coated and an anode under a condition in which the total solid content of the aqueous paint composition is preferably within a range of 5 to 30% by weight, more preferably within a range from 10 to 20% by weight; and a temperature of the electrodeposition paint (composition) is within a range from 20 to 35°C, thereby depositing the paint on the surface of the metal object. The thus deposited paint is washed with water and thereafter baked at 150 to 200°C for 10 to 30 minutes in a baking furnace, thereby obtaining a dried coated paint film having a high weatherability and a high corrosion resistance to the flat surface and the edge portion of the metal object (steel plate).

An example of usage of the electrodeposition paint composition of the present invention is shown in Fig. 1, in which the cationic electrodeposition paint composition 1 of the present invention is coated on the surface of a steel plate 2 forming a road wheel of an automotive vehicle. The steel plate 2 has an edge portion 2a well covered with the paint composition 1.

## EXPERIMENT

In order to evaluate the cationic electrodeposition paint composition of the present invention, discussion will be made on Examples in comparison with Comparative Examples not within the scope of the present invention.

### Example 1

An acrylic cationic resin emulsion (solid content: 30% by weight) was mixed in an amount of 365 parts by weight with 674 parts by weight of an epoxy system cationic electrodeposition paint emulsion ("Powertop U-700 F-2", the trade name of Nippon Paint Co., Ltd. in Japan) which was available on the market for the purpose of industrial use and had a solid content of 38% by weight. After the electrodeposition paint emulsion and the cationic resin emulsion were sufficiently mixed with each other to form a paint mixture, a cationic electrodepositon paint ("Powertop U-30 F-1 black", the trade name of Nippon Paint Co., Ltd. in Japan) which was available on the market and had a solid content of 42% by weight was added in an amount of 321 parts by weight to the paint mixture so as to control the ratio of a pigment content and a resin content of the paint mixture at 1:4. Thereafter, stirring was made for about 2 hours, and the mixture was allowed to stand. Subsequently, cationic gelled particulates or micro-gel of an acrylic system was added to the paint mixture in an amount of 20% by weight relative to the total solid content of the paint mixture. Then dilution of the paint mixture was made with pure water in a manner that the total solid content of the paint mixture became 20% by weight thereby to prepare a cationic electrodeposition paint composition. Into this paint composition in an electrodeposition paint, a test piece (steel plate) already treated with zinc phosphate was dipped and coated with the paint composition by an electrodeposition painting under a condition to obtain a coated paint film having a thickness of 20 u after baking. After the test piece coated with the paint composition was rinsed with water, the test piece was heated at 170°C for 20 minutes to bake the coated paint composition thereby to form the coated paint film on the surface of the test piece, thus producing a specimen. The specimen was subject to evaluation tests discussed after. Results of the evaluation tests are shown in Table 1.

### Example 2 (Comparative Example)

The epoxy system cationic electrodepositon paint emulsion as same as that in example 1 was mixed in an amount of 480 parts by weight with 608 parts by weight of the acrylic cationic resin emulsion as same as that in Example 1 to form a paint mixture. Subsequently, 321 parts by weight of the cationic electrodeposition paint ("Powertop U-30 F-1 black") was added to the paint mixture. After stirring of the paint mixture for 2 hours, a polybutadienic (polybutadiene system) micro-gel was added in an amount of 10% by weight of the total solid content of the paint mixture. Then, pure water was added to the paint mixture to control the total solid content of the paint mixture at 20% by weight, thereby to prepare a cationic electrodeposition paint composition. After allowing the paint composition to stand for 16 hours, a specimen was produced in the same manner as that in Example 1. The specimen was subjected to the evaluation tests. Results of the tests are shown in Table 1.

Example-3

A specimen to be subjected to the evaluation tests was produced in the same manner as that in Example 2 with the exception that the micro-gel of the polybutadiene system was replaced with a micro-gel of acrylic system. The evaluation tests were conducted on the specimen. Results of the evaluation tests are shown in Table 1.

Example 4

A specimen to be subjected to the evaluation tests was produced in the same manner as that in Example 3 with the exception that the weight ratio between the pigment content and the resin content in the paint composition except for the micro-gel and resin is 1:7. The evaluation tests were conducted on the specimen. Results of the evaluation tests are shown in Table 1.

Example 5

The epoxy system cationic electrodeposition paint emulsion as same as that in Example 1 was mixed in an amount of 287 parts with 853 parts by weight of the acrylic cationic resin emulsion as same as that in Example 1 to form a paint mixture. Subsequently, 321 parts by weight of the cationic electrodeposition paint ("Powertop U-30 F-1 black") was added to the paint mixture. After stirring the paint mixture for 2 hours, the acrylic micro-gel of the was added in an amount of 5% by weight of the total solid content of the paint mixture, to the paint mixture. Then, pure water was added to the paint mixture to control the total solid content of the paint mixture at 20% by weight, thereby preparing a cationic electroposition paint composition. With this paint composition, a specimen was produced in the same manner as that in Example 1. The evaluation tests were conducted on the specimen to obtain results shown in Table 1.

Example 6

A specimen to be subjected to the evaluation tests was produced in the same manner as that in Example 5 with the exception that the blended amount of the acrylic micro-gel was 10% by weight of the total solid content of the paint composition. The evaluation tests were conducted on the specimen to obtain results shown in Table 1.

Example 7 (Comparative Example)

The epoxy system cationic electrodeposition paint emulsion as same as that in Example 1 was mixed in an amount of 525 parts by weight with 1552 parts by weight of an acrylic system cationic electrodeposition paint emulsion to form a paint mixture. Thereafter, 321 parts by weight of the cationic electrodeposition paint ("Powertop U-30 F-1 black) was added to the paint mixture. After stirring the paint mixture for 2 hours, the micro-gel of the polybutadiene system was added in an amount of 10% by weight of the total solid content of the paint mixture, to the paint mixture. Pure water was added to the paint mixture so as to control the total solid content of the paint mixture at 20% by weight. Then the paint mixture was allowed to stand for 16 hours, thereby preparing a cationic electrodeposition paint composition. With this paint composition, a specimen was produced in the same manner as that in Example 1. The evaluation tests were conducted on the specimen to obtain test results shown in Table 1.

Example 8

A specimen to be subjected to the evaluation tests was produced in the same manner as that in Example 7 with the exception that the polybutadienic micro-gel of the polybutadiene system was replaced with the micro-gel of the acrylic system. The evaluation tests were conducted on the specimen to obtain test results shown in Table 1.

Example 9

A specimen to be subjected to the evaulation tests was produced in the same manner as that in Example 8 with the exception that the blended amount of the acrylic system micro-gel was changed to 15% by weight of the total solid content of the paint composition.

Example 10

A specimen to be subjected to the evaulation tests was produced in the same manner as that in Example 8 with the exception that the blended amount of the acrylic micro-gel was changed into 20% by weight of the total solid content of the paint composition. The evaluation tests were conducted on the specimen to obtain test results shown in Table 1.

Example 11

A specimen to be subjected to the evaluation tests was produced in the same manner as that in Example 8 with the exception that the blended amount of the acrylic system micro-gel was changed into 25% by weight of the total solid content of the paint composition. The evaluation tests were conducted on the specimen to obtain test results shown in Table 1.

Example 12

The epoxy system cationic electrodeposition paint emulsion as same as that in Example 1 was mixed in an amount of 875 parts by weight with 1108 parts by weight of an acrylic emulsion to form a paint mixture. Thereafter, 321 parts by weight of the cationic electrodeposition paint ("Powertop U-30 F-1 black) was added to the paint mixture. After stirring the paint mixture for 2 hours, the acrylic micro-gel was added in an amount of 10% by weight of the total solid content of the paint mixture, to the paint mixture. Pure water was added to the paint mixture so as to control the total solid content of the paint mixture at 20% by weight, thereby preparing a cationic electrodeposition paint composition. With this paint composition, a specimen was produced in the same manner as that in Example 1. The evaluation tests were conducted on the specimen to obtain test results shown in Table 1.

Example 13

The epoxy system cationic electrodeposition paint emulsion as same as that in Example 8 was mixed in an amount of 350 parts by weight with 1773 parts by weight of an acrylic emulsion to form a paint mixture. Thereafter, 321 parts by weight of the cationic electrodeposition paint ("Powertop U-30 F-1 black) was added to the paint mixture. After stirring the paint mixture for 2 hours, the micro-gel of the acrylic system was added in an amount of 10% by weight of the total solid content of the paint mixture, to the paint mixture. Pure water was added to the paint mixture so as to control the total solid content of the paint mixture at 20% by weight, thereby preparing a cationic electrodeposition paint composition. With this paint composition, a specimen was produced in the same manner as that in Example 8. The evaluation tests were conducted on the specimen to obtain test results shown in Table 1.

Comparative Example 1

961 parts by weight of the epoxy system cationic electrodeposition paint emulsion (as same as that in Example 1) available in the market and 321 parts by weight of the cationic electrodeposition paint ("Powertop U-700 F-2) were added to 1218 parts by weight of pure water thereby controlling the total solid content of a paint mixture at 20% by weight. Thus, a cationic electrode position paint composition was prepared. With this paint composition, an electrodeposition was conducted on a test piece (steel plate) already treated with zinc phosphate, under a condition to obtain a coated paint film having a thickness of 20 μ. After rising the coated test piece with water, the coated test piece was heated at 170°C for 20 minutes, thereby preparing a specimen which was subjected to the evaluation tests. Results of the evaluation tests are shown in Table 1.

9

### Comparative Example 2

2217 parts by weight of the acrylic cationic electrodeposition paint emulsion (solid content: 30% by weight) as same as that in Example 1 and 321 parts by weight of the cationic electrodeposition paint ("Powertop U-30 F-1 black) were added to 1462 parts by weight of pure water thereby controlling the total solid content of a paint mixture at 20% by weight. Thus, a cationic electrodeposition paint composition was prepared. With this paint composition, a specimen to be subjected to the evaluation tests was prepared in the same manner as that in Comparative Example 1. The evaluation tests were conducted on the specimen to obtain test results shown in Table 1.

## EVALUATION TEST

### Painting method

The electrodeposition paint composition of each of Examples 1 to 13 and Comparative Examples 1 and 2 was supplied to a vessel made of vinyl chloride. The test piece or metal object (mentioned below) to be coated was dipped in the paint composition in the vessel to serve as a cathode, providing an anode dipped in the paint composition. Then, a cationic electrodeposition was conducted at a paint temperature of 28°C under stirring of the paint composition, passing electric current between the test piece and the anode. The electrodeposition condition was so predetermined as to obtain a coated paint film having an average thickness of 20 u after baking. After completion of the electrodeposition painting, the coated test piece was baked under a condition mentioned below, thus preparing the specimen to be subjected to the evaluation tests.

The test piece (metal object) to be coated: (1) A steel plate (SPCC according to Japanese Industrial Standard G3141) having dimensions of 150 mm x 70 mm x 0.8 mm; and (2) A steel cutter knife blade which had been treated with zinc phosphate before the electrodeposition painting.

The baking condition: 170°C and 20 minutes

### Testing method for Evaluation test

### (1) Corrosion resistance

A salt water spraying test according to Japanese Industrial Standard Z2371 was conducted on each specimen obtained in accordance with the above painting method. Regarding the specimen of the SPCC steel plate, the salt water spraying test was carried out for 1000 hours after a cut is formed on the surface of the coated paint film by a cutter knife in a manner to reach the steel plate. Then, the degree of production of red rust was observed to evaluate a corrosion resistance of the coated paint film to the steel plate. Regarding the specimen of the cutter knife blade, the salt water spraying test was carried out for 168. Then, the degree of production of red rust was observed to evaluate a corrosion resistance of the coated paint film to the steel plate. Evaluation of the corrosion resistance is shown in Table 1.

### Weatherability test

An accelerated weatherability test according to Japanese Industrial Standard D 0205 was conducted for 100 hours on the specimen obtained in accordance with the above painting method. After the accelerated weatherability test, the degree of chalking of the surface of the coated paint film was observed to evaluate the weatherability of the specimen. Evaluation of the weatherability is shown in Table 1.

### Smoothness of coated paint film

Measurement of a surface roughness of the coated paint film was conducted on the coated paint film of the specimen obtained in accordance with the above painting method by using a surface roughness tester "Surf Roughness Tester 401" produced by Mitutoyo Co., Ltd. in Japan, thereby evaluating the smoothness of the coated paint film of the specimen. Evaluation of the smoothness is shown in Table 1.

Table 1

| | EP/AC a) | P/V b) | F-1 c) | EP d) | AC e) | MG f) Component g) | MG f) Amount | Pure water | Total | Corrosion resistance Steel plate | Corrosion resistance Knife blade | Weather-ability | Smoothness |
|---|---|---|---|---|---|---|---|---|---|---|---|---|---|
| Example 1 | 7/3 | 1/4 | 321 | 674 | 365 | AC | (20%) 1000 | 1142 | 3500 | Good | Good | Not Good | Good |
| Example 2 | 5/5 | 1/4 | 321 | 480 | 608 | PB | (10%) 250 | 1091 | 2750 | Good | Good | Not Good | Good |
| Example 3 | 5/5 | 1/4 | 321 | 480 | 608 | AC | (10%) 500 | 841 | 2750 | Good | Good | Good | Good |
| Example 4 | 5/5 | 1/7 | 321 | 480 | 608 | AC | (10%) 500 | 841 | 2750 | Good | Good | Good | Good |
| Example 5 | 5/5 | 1/4 | 321 | 287 | 853 | AC | (5%) 250 | 914 | 2625 | Good | Bad | Good | Good |
| Example 6 | 3/7 | 1/4 | 321 | 287 | 853 | AC | (10%) 500 | 789 | 2750 | Good | Good | Good | Good |
| Example 7 | 3/7 | 1/7 | 321 | 525 | 1552 | PB | (10%) 400 | 1602 | 4400 | Good | Good | Good | Good |
| Example 8 | 3/7 | 1/7 | 321 | 525 | 1552 | AC | (10%) 800 | 1202 | 4400 | Good | Good | Good | Good |
| Example 9 | 3/7 | 1/7 | 321 | 525 | 1552 | AC | (15%) 1200 | 1002 | 4600 | Good | Good | Good | Good |
| Example 10 | 3/7 | 1/7 | 321 | 525 | 1552 | AC | (20%) 1600 | 802 | 4800 | Good | Good | Good | Good |
| Example 11 | 3/7 | 1/7 | 321 | 525 | 1552 | AC | (25%) 2000 | 602 | 5000 | Good | Good | Good | Bad |
| Example 12 | 5/5 | 1/7 | 321 | 875 | 1108 | AC | (10%) 800 | 1296 | 4400 | Good | Good | Good | Good |
| Example 13 | 2/8 | 1/7 | 321 | 350 | 1173 | AC | (10%) 800 | 1156 | 4400 | Not Good | Not Good | Good | Good |
| Comparative Example 1 | 10/0 | 1/4 | 321 | 961 | - | - | - | 1218 | 2500 | Good | Bad | Bad | Good |
| Comparative Example 2 | 0/10 | 1/7 | 321 | - | 2217 | - | - | 1462 | 4000 | Bad | Bad | Good | Good |

Note: a) A weight ratio between Epoxy resin (EP) containing isocyanate and acrylic resin (AC) in solid content
b) A weight ratio between pigment and total resin content in an electrodeposition paint composition
c) "powertop U-30 F-1 black"   d) Epoxy resin containing isocyanate   e) Acrylic resin   f) Micro-gel
g) AC ... Acrylic, PB ... Polybutadienic

## Claims

1. A cationic electrodeposition paint composition comprising:
   an amine-modified epoxy resin;
   a fully blocked isocyanate;
   a cationic emulsified and dispersed acrylic resin, the weight ratio, on a solids basis, of the total of the epoxy resin and the isocyanate to the acrylic resin being from 50:50 to 30:70;
   an acrylic cationic gelled particulate in an amount, ca;ci;ted as sp;ods, of from 10 to 20% by weight

11

of the total solids content of the paint composition; and

a pigment in an amount such that the weight ratio, on a solids basis, of the pigment to the total resin content of the paint composition is from 1:4 to 1:7.

2. A paint composition as claimed in claim 1 in which the cationic gelled particulate has an average particle size of from 0.2 to 20 $\mu$m.

3. A paint composition as claimed in any one of the preceding claims in which the amine-modified epoxy resin is produced by reaction between a secondary amine and an epoxy resin.

4. A paint composition as claimed in claim 3 in which the secondary amine is diethyl amine, dibutyl amine, diethanol amine, N-methylethanol amine or a ketimine-blocked secondary amine; and/or the epoxy resin in a glycidyl ether type epoxy resin, glycidyl ester type epoxy resin, linear aliphatic epoxy resin, alicyclic epoxy resin or a modified epoxy resin of any of these.

5. A paint composition as claimed in any one of the preceding claims in which the fully blocked isocyanate is produced by reaction between a polyisocyanate compound and a compound having active hydrogen.

6. A paint composition as claimed in claim 5 in which the polyisocyanate compound is tolylene diisocyanate, xylylene diisocyanate, isophorone diisocyanate or hexamethylene diisocyanate; and/or the compound having active hydrogen is an alcohol, phenol or oxime.

7. A paint composition as claimed in any one of the preceding claims in which the cationic emulsified and dispersed acrylic resin is produced by copolymerization of a first unsaturated monomer having a basic group and a second unsaturated monomer.

8. A paint composition as claimed in claim 7 in which the first unsaturated monomer is N-N-dimethylaminoethyl (meth)acrylate, N-t-butylaminoethyl (meth)acrylate, N,N-dimethylaminopropyl (meth)acrylamide, or N-vinylimidazole; and/or the second unsaturated monomer is methyl (meth)-acrylate, ethyl (meth)acrylate, n-butyl (meth)acrylate, 2-ethylhexyl (meth)acrylate, n-butyl (meth)-acrylate, 2-ethylhexyl (meth)acrylate, hydroxyethyl (meth)acrylate, hydroxypropyl (meth)acrylate, hydroxyhexyl (meth)acrylate, styrene, vinyl toluene, 2-methyl methylene, chlorostyrene, N-methylol (meth)acrylamide, N-butoxymethyl (meth)acrylamide, glycidyl (meth)acrylate, acrylonitrile or vinyl acetate.

9. A paint composition as claimed in any one of claims 1-6 in which the cationic emulsified and dispersed acrylic resin is produced by adding a basic group to a copolymer of an unsaturated monomer having glycidyl group.

10. A paint composition as claimed in claim 9, wherein the basic group is diethyl amine, dibutyl amine, dipropyl amine, diethanol amine, dipropanol amine or N-methyl-ethanol amine.

11. A paint composition as claimed in any one of the preceding claims in which the cationic gelled particulate is produced by polymerisation of at least one unsaturated monomer in a liquid so that the polymer produced is dispersed in the liquid.

12. A paint composition as claimed in any one of the preceding claims in which the cationic gelled particulate is produced by polymerization of one or more of ethyleneglycol diacrylate, ethyleneglycol dimethacrylate, triethylene glycol dimethacrylate, tetraethyleneglycol dimethacrylate, 1,3-butyleneglycol dimethacrylate, trimethylpropane triacrylate, trimethylpropane trimethacrylate, 1,4-butanediol diacrylate, neopentylglycol diacrylate, 1,6-hexanediol diacrylate, pentaerythritol diacrylate, pentaerythritol triacrylate, pentaerythritol tetraacrylate, pentaerythritol dimethacrylate, pentaerythritol trimethacrylate, pentaerythritol tetramethacrylate, glyerol dimethacrylate, glycerol diacrylate, glycerolaryloxy dimethacrylate, 1,1,1-trishydroxy methylethane triacrylate, 1,1,1-trishydroxy methylethane dimethacrylate, 1,1,1-trishydroxy methylethane trimethacrylate, 1,1,1-trishydroxy methylpropane diacrylate, 1,1,1-trishydroxy methyl propane triacrylate, 1,1,1-trishydroxy methylpropane dimethacrylate, 1,1,1-trishydroxy methylpropane trimethacrylate, triallyl cyanurate, triallyl isocyanurate, triallyl trimellitate, diallyl terephthalate, diallyl phtahalate, divinyl benzene, glycidyl acrylate, diglycidyl methacrylate, acrylic acid, methacrylic acid, N,N-dimethylaminoethyl (meth)acrylate, N-t-butylaminoethyl (meth)-acrylate, N,N-dimethylaminopropyl (meth)acrylamide, N-vinyl imidazole, methyl (meth)acrylate, ethyl (meth)acrylate, n-butyl (meth)acrylate, 2-ethylhexyl (meth)acrylate, hydroxyethyl (meth)acrylate, hydroxypropyl (meth)acrylate, hydroxyhexyl (meth)acrylate, styrene, vinyl toluene, 2-methyl methylene, chlorostyrene, N-methylol (meth)acrylamide, N-butoxymethyl (meth)acrylamide, glycidyl (meth)acrylate, acrolyonitrile, and vinyl acetate.

13. A paint composition as claimed in any one of the preceding claims further comprising at least one organic solvent selected from methyl alcohol, ethyl alcohol, isopropyl alcohol, butyl alcohol, hexyl alcohol, ethyleneglycol monomethyl ether, ethyleneglycol monoethyl ether, ethyleneglycol monobutyl ether and ethyleneglycol monoisopropyl ether, xylene, toluene, methylethyl ketone, methylisobutyl ketone and isophorone.

14. A paint composition as calimed in claim 13 in which the organic solvent is present in an amount of from 10 to 40% by weight of the total solids content of the paint composition.

15. A part of an automotive vehicle, especially a road wheel, comprising:
a steel plate; and
a paint film coated on a surface of said steel plate, said paint film being formed from a cationic electrodeposition paint composition as claimed in any one of the preceding claims.

## Patentansprüche

1. Kationische Elektrotauchlack-Zusammensetzung, umfassend:
ein aminmodifiziertes Epoxidharz,
ein voll blockiertes Isocyanat,
ein kationisches, emulgiertes und dispergiertes Acrylharz, wobei das Gewichtsverhältnis, auf einer Feststoffbasis, der Gesamtsumme des Epoxidharzes und des Isocyanats zu dem Acrylharz von 50:50 bis 30:70 beträgt,
ein acrylisches, kationisches, geliertes Teilchen in einer Menge, berechnet als Feststoffe, von 10 bis 20 Gew.-% des Gesamtfeststoffanteils der Lackzusammensetzung und
ein Pigment in einer solchen Menge, daß das Gewichtsverhältnis, auf einer Feststoffbasis, des Pigments zu dem gesamten Harzanteil der Lackzusammensetzung von 1:4 bis 1:7 beträgt.

2. Lackzusammensetzung nach Anspruch 1, in der das kationische, gelierte Teilchen eine mittlere Teilchengröße von 0,2 bis 20 μm aufweist.

3. Lackzusammensetzung nach einem der vorhergehenden Ansprüche, in der das aminmodifizierte Epoxidharz durch Reaktion zwischen einem sekundären Amin und einem Epoxidharz hergestellt ist.

4. Lackzusammensetzung nach Anspruch 3, in der das sekundäre Amin Diethylamin, Dibutylamin, Diethanolamin, N-Methylethanolamin oder ein Ketiminblockiertes sekundäres Amin ist und/oder das Epoxidharz ein Glycidylethertyp-Epoxidharz, Glycidylestertyp-Epoxidharz, lineares aliphatisches Epoxidharz, alicyclisches Epoxidharz oder ein modifiziertes Epoxidharz von einem derselben ist.

5. Lackzusammensetzung nach einem der vorhergehenden Ansprüche, in der das voll blockierte Isocyanat durch Reaktion zwischen einer Polyisocyanat-Verbindung und einer aktiven Wasserstoff aufweisenden Verbindung hergestellt ist.

6. Lackzusammensetzung nach Anspruch 5, in der die Polyisocyanat-Verbindung Tolylendiisocyanat, Xylylendiisocyanat, Isophorondiisocyanat oder Hexamethylendiisocyanat ist und/oder die aktiven Wasserstoff aufweisende Verbindung ein Alkohol, Phenol oder Oxim ist.

7. Lackzusammensetzung nach einem der vorhergehenden Ansprüche, in der das kationische, emulgierte und dispergierte Acrylharz durch Copolymerisation von einem ersten ungesättigten Monomer, das eine basische Gruppe aufweist, und einem zweiten ungesättigten Monomer hergestellt ist.

13

**EP 0 415 593 B1**

8. Lackzusammensetzung nach Anspruch 7, in der das erste ungesättigte Monomer N,N-Dimethylaminoethyl-(meth)acrylat, N-t-Butylaminoethyl(meth)acrylat, N,N-Dimethylaminopropyl-(meth)acrylamid oder N-Vinylimidazol und/oder das zweite ungesättigte Monomer Methyl(meth)acrylat, Ethyl(meth)acrylat, n-Butyl(meth)acrylat, 2-Ethylhexyl(meth)acrylat, n-Butyl(meth)acrylat, 2-Ethylhexyl(meth)acrylat, Hydroxyethyl(meth)acrylat, Hydroxypropyl(meth)acrylat, Hydroxyhexyl(meth)acrylat, Styrol, Vinyltoluol, 2-Methyl-methylen, Chlorstyrol, N-Methylol(meth)acrylamid, N-Butoxymethyl(meth)acrylamid, Glycidyl-(meth)acrylat, Acrylnitril oder Vinylacetat ist.

9. Lackzusammensetzung nach einem der Ansprüche 1 bis 6, in der das kationische, emulgierte und dispergierte Acrylharz durch Hinzufügen einer basischen Gruppe zu einem Copolymer eines ungesättigten Monomers mit Glycidylgruppe hergestellt ist.

10. Lackzusammensetzung nach Anspruch 9, in der die basische Gruppe Diethylamin, Dibutylamin, Dipropylamin, Diethanolamin, Dipropanolamin oder N-Methyl-ethanolamin ist.

11. Lackzusammensetzung nach einem der vorhergehenden Ansprüche, in der das kationische, gelierte Teilchen durch Polymerisation von mindestens einem ungesättigten Monomer in einer Flüssigkeit hergestellt ist, so daß das hergestellte Polymer in der Flüssigkeit dispergiert ist.

12. Lackzusammensetzung nach einem der vorhergehenden Ansprüche, in der das kationische, gelierte Teilchen durch Polymerisation von einem oder mehreren von Ethylenglycoldiacrylat, Ethylenglycoldimethacrylat, Triethylenglycoldimethacrylat, Tetraethylenglycoldimethacrylat, 1,3-Butylenglycoldimethacrylat, Trimethylpropantriacrylat, Trimethylpropantrimethacrylat, 1,4-Butandioldiacrylat, Neopentylglycoldiacrylat, 1,6-Hexandioldiacrylat, Pentaerythrit-diacrylat, Pentaerythrit-triacrylat, Pentaerythrit-tetraacrylat, Pentaerythrit-dimethacrylat, Pentaerythrit-trimethacrylat, Pentaerythrittetramethacrylat, Glycerindimethacrylat, Glycerindiacrylat, Glycerinaryloxydimethacrylat, 1,1,1-Trishydroxymethylethantriacrylat, 1,1,1-Trishydroxymethylethan-dimethacrylat, 1,1,1-Trishydroxymethylethan-trimethacrylat, 1,1,1-Trishydroxymethylpropan-diacrylat, 1,1,1-Trishydroxymethylpropan-triacrylat, 1,1,1-Trishydroxymethylpropan-dimethacrylat, 1,1,1-Trishydroxymethylpropan-trimethacrylat, Triallylcyanurat, Triallylisocyanurat, Triallyltrimellitat, Diallylterephthalat, Diallylphthalat, Divinylbenzol, Glycidylacrylat, Diglycidylmethacrylat, Acrylsäure, Methacrylsäure, N,N-Dimethylaminoethyl(meth)acrylat, N-t-Butylaminoethyl(meth)acrylat, N,N-Dimethylaminopropyl(meth)acrylamid, N-Vinylimidazol, Methyl(meth)acrylat, Ethyl(meth)acrylat, n-Butyl(meth)acrylat, 2-Ethylhexyl(meth)acrylat, Hydroxyethyl(meth)acrylat, Hydroxypropyl(meth)acrylat, Hydroxyhexyl(meth)acrylat, Styrol, Vinyltoluol, 2-Methylmethylen, Chlorstyrol, N-Methylol(meth)-acrylamid, N-Butoxymethyl(meth)acrylamid, Glycidyl(meth)acrylat, Acrylnitril und Vinylacetat hergestellt ist.

13. Lackzusammensetzung nach einem der vorhergehenden Ansprüche, weiterhin umfassend mindestens ein organisches Lösemittel ausgewählt aus Methylalkohol, Ethylalkohol, Isopropylalkohol, Butylalkohol, Hexylalkohol, Ethylenglycolmonomethylether, Ethylenglycolmonoethylether, Ethylenglycolmonobutylether und Ethylenglycolmonoisopropylether, Xylol, Toluol, Methylethylketon, Methylisobutylketon und Isophoron.

14. Lackzusammensetzung nach Anspruch 13, in der das organische Lösemittel in einer Menge von 10 bis 40 Gew.-% des Gesamtfeststoffanteils der Lackzusammensetzung vorliegt.

15. Teil eines Kraftfahrzeugs, insbesondere ein Straßenrad, umfassend:
   eine Stahlplatte und
   einen auf eine Oberfläche der Stahlplatte aufgetragenen Lackfilm, wobei der Lackfilm aus einer kationischen Elektrotauchlack-Zusammensetzung nach einem der vorhergehenden Ansprüche gebildet ist.

**Revendications**

1. Composition de peinture pour dépôt électrolytique cationique comprenant :
   une résine époxy modifiée amine;
   un isocyanate complètement bloqué;
   un résine acrylique dispersée et émulsifiée cationique, le rapport en poids, sur la base des solides, du

14

total de la résine époxy et de l'isocyanate à la résine acrylique étant de 50:50 à 30:70;
des particules gélifiées cationiques acryliques en une quantité; ca; ci; ted comme sp; ods, de 10 à 20% en poids de la teneur totale en solides de la composition de peinture; et
un pigment en une quantité telle que le rapport en poids, sur une base de solides, du pigment à la teneur totale en résine de la composition de peinture est de 1:4 à 1:7.

2. Composition de peinture selon la revendication 1 dans laquelle les particules gélifiées cationiques ont une taille moyenne de particules de 0,2 à 20μm.

3. Composition de peinture selon l'une quelconque des revendications précédentes dans laquelle la résine époxy modifiée amine est produite par réaction entre une amine secondaire et une résine époxy.

4. Composition de peinture selon la revendication 3 dans laquelle l'amine secondaire est la diéthyl amine, la dibutyl amine, la diéthanol amine, la N-méthyléthanol amine ou une amine secondaire bloquée par une cétimine; et/ou la résine époxy est une résine époxy de type glycidyl éther, une résine époxy de type glycidyl ester, une résine époxy aliphatique linéaire, une résine époxy alicyclique ou une résine époxy modifiée de l'une de celles-ci.

5. Composition de peinture selon l'une quelconque des revendications précédentes dans laquelle l'isocyanate complètement bloqué est produit par réaction entre un composé polyisocyanate et un composé ayant un hydrogène actif.

6. Composition de peinture selon la revendication 5, dans laquelle le composé polyisocyanate est le diisocyanate de tolylène, le diisocyanate de xylylène, le diisocyanate d'isophorone ou le diisocyanate d'hexaméthylène; et/ou le composé ayant un hydrogène actif est un alcool, un phénol ou une oxime.

7. Composition de peinture selon l'une quelconque des revendications précédentes dans laquelle la résine acrylique dispersée et émulsifiée cationique est produite par copolymérisation d'un premier monomère insaturé ayant un groupe basique et d'un second monomère insaturé.

8. Composition de peinture selon la revendication 7 dans laquelle le premier monomère insaturé est le N-N-diméthylaminoéthyl (méth) acrylate, le N-t-butylaminoéthyl (méth) acrylate, le N,N-diméthylaminopropyl (méth) acrylamide, ou la N-vinylimidazole; et/ou le second monomère insaturé est le méthyl (méth) acrylate, éthyl (méth) acrylate, n-butyl (méth) acrylate, 2-éthylhexyl (méth) acrylate, n-butyl (méth) acrylate, 2-éthylhexyl (méth) acrylate, hydroxyéthyl (méth) acrylate, hydroxypropyl (méth) acrylate, hydroxyhexyl (méth) acrylate, styrène, vinyl toluène, 2-méthyl méthylène, chlorostyrène, N-méthylol (méth) acrylamide, N-butoxyméthyl (méth) acrylamide, glycidyl (méth) acrylate, acrylonitrile ou vinyl acétate.

9. Composition de peinture selon l'une quelconque des revendications 1 à 6, dans laquelle la résine acrylique dispersée et émulsifiée cationique est produite par ajout d'un groupe basique à un copolymère d'un monomère insaturé ayant un groupe glycidyle.

10. Composition de peinture selon la revendication 9, dans laquelle le groupe basique est la diéthyl amine, la dibutyl amine, la dipropyl amine, la diéthanol amine, la dipropanol amine ou la N-méthyl-éthanol amine.

11. Composition de peinture selon l'une quelconque des revendications précédentes dans laquelle les particules gélifiées cationiques sont produites par polymérisation d'au moins un monomère insaturé dans un liquide de sorte que le polymère produit est dispersé dans le liquide.

12. Composition de peinture selon l'une quelconque des revendications précédentes dans laquelle les particules gélifiées cationiques sont produites par polymérisation de un ou plus d'un éthylèneglycol diacrylate, éthylèneglycol diméthacrylate, triéthylène glycol diméthacrylate, tétraéthylèneglycol diméthacrylate, 1,3-butylèneglycol diméthacrylate, triméthylpropane triacrylate, triméthylpropane triméthacrylate, 1,4-butanediol diacrylate, néopentylglycol diacrylate, 1,6-hexanediol diacrylate, pentaérythritol diacrylate, pentaérythritol triacrylate, pentaérythritol tétraacrylate, pentaérythritol diméthacrylate, pentaérythritol triméthacrylate, pentaérythritol tétraméthacrylate, glycérol diméthacrylate, glycérol diacrylate, glycérolaryloxy diméthacrylate, 1,1,1-trishydroxy méthyléthane triacrylate, 1,1,1-trishydroxy méthyléthane diméthacrylate, 1,1,1-trishydroxy méthyléthane triméthacrylate, 1,1,1-trishydroxy méthylpropane diacrylate, 1,1,1-trishydroxy méthyl propane triacrylate, 1,1,1-trishydroxy méthylpropane diméthacrylate, 1,1,1-trishydroxy méthylpropane triméthacrylate, triallyl cyanurate, triallyl isocyanurate, triallyl trimellitate, diallyl térephthalate, diallyl phtahalate, divinyl benzène, glycidyl acrylate, diglycidyl méthacrylate, acide acrylique, acide méthacrylique, N,N-diméthylaminoéthyl (méth) acrylate, N-t-butylaminoéthyl (méth) acrylate, N,N-diméthylaminopropyl (méth) acrylamide, N-vinyl imidazole, méthyl (méth) acrylate, éthyl (méth) acrylate, n-butyl (méth) acrylate, 2-éthylhexyl (méth)acrylate, hydroxyéthyl (méth) acrylate, hydroxypropyl (méth) acrylate, hydroxyhexyl (méth) acrylate, styrène, vinyl toluène, 2-méthyl méthylène, chlorostyrène, N-méthylol (méth) acrylamide, N-butoxyméthyl (méth) acrylamide, glycidyl (méth) acrylate, acrolyonitrile, et acétate de vinyle.

13. Composition de peinture selon l'une quelconque des revendications précédentes comprenant de plus au moins un solvant organique choisi parmi l'alcool méthylique, l'alcool éthylique, l'alcool isopropylique, l'alcool butylique, l'alcool hexylique, l'éthylène glycol monoéthyl éther, l'éthylèneglycol monobutyl éther, l'éthylèneglycol monoéthyl éther, l'éthylèneglycol monobutyl éther et l'éthylèneglycol monoisopropyl éther, le xylène, le toluène, la méthyéthyl cétone, la méthylisobutyl cétone et l'isophorone.

14. Composition de peinture selon la revendication 13 dans laquelle le solvant organique est présent en une quantité de 10 à 40% en poids de la teneur totale en solides de la composition de peinture.

15. Partie d'un véhicule automobile, spécialement une roue de route, comprenant :
une plaque en acier; et
un film de peinture recouvert sur une surface de ladite plaque en acier, ledit film de peinture étant formé à partir d'une composition de peinture pour dépôt électrolytique cationique selon l'une quelconque des revendications précédentes.

# FIG. 1